# EUROPEAN PATENT APPLICATION

(11) **EP 3 358 236 A1**
(43) Date of publication of application: **08.08.2018**
(21) Application number: 16851687.0
(22) Date of filing: 28.09.2016
(51) Int. Cl.: F16L 11/10, B32B 1/08

(54) **RESIN MATERIAL FOR HOSES, HOSE TUBE AND HOSE**

(30) Priority: 28.09.2015 JP 2015190496
(71) Applicant: Bridgestone Corporation, Tokyo 104-8340 (JP)
(72) Inventor: MATSUYAMA, Fumiaki, Tokyo 104-8340 (JP)
(74) Representative: Oxley, Robin John George
(86) International application number: PCT/JP2016/078727
(87) International publication number: WO 2017/057516

(57) **Abstract**

A resin material for a hose, the resin material having a breaking extension of 20% or more under an environment of -40°C and containing substantially no plasticizer.

## Description

### Technical Field

The disclosure relates to a resin material for a hose, a hose tube, and a hose.

### Background Art

In recent years, a hose having a reinforcing layer and an inner tube, which is made of a resin material and is positioned inside the reinforcing layer, has been developed as an alternative to a metal pipe or the like for transporting a liquid or a gas at high pressure.

For example, Japanese Patent Application Laid-Open No. (JP-A) 2010-190343 proposes a pressure-resistant hose having an inner layer and an intermediate layer, which are made of a thermoplastic resin such as polyvinyl chloride, a reinforcing wire that is tightly wound around the inner layer and the intermediate layer, and an outer layer.

### Summary of the Invention

### Problems to be Solved by the Invention

In recent years, there is an increasing demand for a hose that supplies hydrogen gas from a hydrogen gas station or the like to a fuel cell of a vehicle or the like. Since hydrogen gas is transported through a hose with a highest possible pressure and a lowest possible temperature for the purpose of improving the filling efficiency, the hose is required to be highly durable in a cold environment. In the field of pressure-resistant hoses, in the past, durability thereof has been considered mainly in terms of a thermoneutral environment, and there is room for improvement in durability in a cold environment.

Therefore, developments in a resin material for a hose that is capable of producing a hose having excellent durability in a cold environment, and developments in a hose tube and a hose which use the resin material are anticipated.

### Means for Implementing the Invention

A resin material for a hose that has a breaking extension of 20% or more under an environment of -40°C, and comprises substantially no plasticizer.

### Effects of the Invention

According to the disclosure, a resin material for a hose that is capable of producing a hose having an excellent durability under a cold environment, and a hose tube and a hose which use the resin material are provided.

### Embodiments for Implementing the Invention

In the following, specific embodiments of the disclosure are explained. It should be noted that the disclosure is not limited to these embodiments and may be implemented with appropriate modification.

In the specification, a resin refers to a concept including a thermoplastic resin and a thermosetting resin but not including a vulcanized rubber.

In the specification, a numerical range described as "from A to B" refers to a range including A and B as a minimum value and a maximum value, respectively.

In the specification, a process refers not only to an independent process but also a process that is not clearly distinguishable from other processes, as long as it achieves the purpose thereof.

### <Resin material for hose>

The resin material for a hose (hereinafter, also simply referred to as a resin material) has a breaking extension of 20% or more under an environment of -40°C and contains substantially no plasticizer.

In the specification, cases in which the resin material contains substantially no plasticizer include (1) a case in which the resin material does not contain a plasticizer at all and (2) a case in which the resin material contains a plasticizer in an amount of 3% by mass or less, preferably 1% by mass or less, of the total resin material.

In the specification, a hose refers to a tubular object that has flexibility and is capable of transporting a material to be transported (for example, a fluid such as a liquid or a gas).

A resin used as a material for a hose is generally added with a plasticizer in order to improve durability or flexibility of the same, or in order to adapt the same to extrusion molding. Generally, it is considered that a breaking extension of a resin is increased by the addition of a plasticizer. However, the inventors have found that a certain type of resin exhibits a smaller breaking extension under a cold environment when it contains substantially no plasticizer, as compared with a case in which the resin is added with a plasticizer. The invention has been made base on this finding, and provides a resin material that is capable of producing a hose that exhibits excellent durability under a cold environment.

In the specification, a plasticizer refers to a compound that is used for the purpose of modifying a property of a resin, such as flexibility. The type of the plasticizer is selected depending on the type of the resin. In a case of polyamide, examples of the plasticizer include benzene sulfonamide derivatives, such as N-butyl benzene sulfonamide (BBSA), ethyl toluene sulfonamide and N-cyclohexyl toluene sulfonamide, hydroxybenzoic acid esters, such as 2-ethylhexyl p-hydroxybenzoate and 2-decylhexyl p-hydroxybenzoate, tetrahydrofurfuryl alcohol esters or ethers, such as oligoethyleneoxy tetrahydrofurfuryl alcohol, citric acid, hydroxymalonic acid esters such as oligoehyleneoxy malonate, and phenol compounds.

Determination of whether or not the resin material contains a plasticizer or measurement of the amount thereof may be performed by a known process such as gas chromatography.

The resin material of the embodiment has a breaking extension of 20% or more under an environment of -40°C, because of containing substantially no plasticizer. By using a resin material that satisfies this requirement, a hose having sufficient durability and caulking property under a cold environment can be obtained. The resin material preferably has a breaking extension under an environment of -40°C of preferably 50% or more, more preferably 100% or more, further preferably 150% or more.

The upper limit of the breaking extension under an environment of -40°C of the resin material is not particularly limited. From the viewpoint of attaining sufficient durability, strength, formability (such as stability with respect to a winding process with a reinforcing material), caulking property and bracket assembly property, the breaking extension under an environment of -40°C of the resin material may be 600% or less, preferably 500% or less, more preferably 300% or less, further preferably 260% or less.

In the specification, the value of the breaking extension is a value measured by a method based on JIS K 6251 (2010). Specifically, a test piece having a 6-grade dumbbell shape, which is prepared from a resin material, is pulled at a rate of 500 mm/min with a tension tester. By performing the process under a predetermined temperature, a breaking extension at the predetermined temperature is obtained.

The resin material preferably has a breaking strength under an environment of -40°C of 25 MPa or more. By satisfying this requirement, a hose having a sufficient strength under a cold environment can be produced. The resin material more preferably has a breaking strength under an environment of -40°C of 30 MPa or more, further preferably 40 MPa or more.

The upper value of the breaking strength under an environment of -40°C of the resin material is not particularly limited. From the viewpoint of attaining sufficient durability, strength, formability (such as stability with respect to a winding process with a reinforcing material), caulking property and bracket assembly property, the breaking strength under an environment of - 40°C of the resin material may be 200 MPa or less, preferably 120 MPa or less, more preferably 100 MPa or less, further preferably 85 MPa or less.

In the specification, the breaking strength refers to a maximum value of a tensile strength (MPa) under which a test piece prepared from the resin material can withstand, without breakage, a tensile test for measurement of a breaking extension as mentioned above.

From the viewpoint of formability into a hose and properties required for a pressure-resistant hose, the resin included in the resin material is preferably a thermoplastic resin. Specific examples of the thermoplastic resin include polyamide, polyester, polyurethane, polyether ketone, polyether ether ketone, polyimide, polylactate, polyvinyl chloride, polyacetal, acrylic resin and fluorine-containing resin. The resin may be used alone or in combination of two or more kinds. The resin material may be in the form of an elastomer.

Among the resins as mentioned above, polyamide is preferred in view of formability to a hose and properties required for a pressure-resistant hose. Examples of the polyamide include aliphatic polyamide (nylon) such as nylon 11 (PA11), nylon 6 (PA6), nylon 9 (PA9), nylon 10 (PA10) and nylon 610 (PA610) and aromatic polyamide (aramide). The polyamide may be used alone or in combination of two or more kinds.

Among the polyamides as mentioned above, nylon 11 (PA11) is preferred in view of achieving necessary properties for a pressure-resistant hose and durability under a cold environment.

When the resin included in the resin material includes nylon 11 (PA11), the content thereof is preferably 90% by mass or more of the total resin. The resin component may consist only of nylon 11.

The melting point of the resin included in the resin material is not particularly limited, but is generally preferably higher in order to suppress permeation of hydrogen gas. A resin having a high melting point tends to be low in crystallinity and high in hydrogen gas permeability. In view of this, the resin preferably has a melting point of from 180°C to 210°C. In the specification, the melting point of the resin is a value as measured with a differential scanning calorimeter (DSC).

The crystallinity of the resin included the resin material is not particularly limited, but is preferably 75% or less, more preferably from 20% to 75%, further preferably from 20% to 35%. In the specification, the crystallinity of the resin is a value as measured with a differential scanning calorimeter (DSC).

The weight average molecular weight (Mw) of the resin included in the resin material is not particularly limited, but is preferably 50,000 or more in view of gas permeability and durability under a cold environment. From the viewpoint of formability and processability, the weight average molecular weight of the resin is preferably 70,000 or less. In the specification, the weight average molecular weight of the resin is a value as measured by gel permeation chromatography (GPC) with PMMA as a basis.

The resin material may include a component other than a resin as long as it does not hinder the effect of the resin material. Examples of the component other than a resin include an antioxidant, a colorant, a filler, an antistatic, a thermostabilizer and a flame retardant.

The portion in a hose to which the resin material is to be applied is not particularly limited, but is preferably a resin layer inside the hose (inner tube), more preferably a resin layer that contacts a material to be transported by the hose. By forming a resin layer from the resin material, a hose that exhibits excellent durability even when it is used under a cold environment or when it is used for transporting a cold material.

### <Hose tube>

The hose tube of the embodiment is a product formed from a resin material that has a breaking extension of 20% or more under an environment of -40°C and contains substantially no plasticizer.

The hose tube exhibits excellent durability under a cold environment. Therefore, the hose tube is suitably used as a member of a hose to be used under a cold environment or a hose for transporting a cold material. Examples of the hose include a hose for transporting a gas in a compressed state, such as hydrogen gas, carbon dioxide gas, propane gas, oxygen gas, and other kinds of combustible gases.

The hose tube is preferably formed from the resin material for a hose as mentioned above. The properties, components and the like of the resin material are as mentioned above. The method of forming a hose tube is not particularly limited, and may be performed by a known method. The hose tube is preferably present at a position to be in contact with a material to be transported by a hose. A hose may have a single hose tube or may have two or more thereof.

The inner diameter of the hose tube (the maximum diameter of a hollow portion at a section of the hose tube) is not particularly limited, and may be selected depending on the desired properties such as strength or durability. For example, the inner diameter of the hose tube may be 3.0 mm or more, preferably 4.0 mm or more. The inner diameter of the hose tube may be 51.0 mm or less, preferably 25.4 mm or less.

The thickness of the hose tube (the thickness of a portion formed of the resin material at a section of the hose tube) is not particularly limited, and may be selected depending on the desired properties such as strength or durability. For example, the thickness of the hose tube may be 0.05 mm or more, preferably 0.5 mm or more. The thickness of the hose tube may be 10 mm or less, preferably 5 mm or less.

### <Hose>

The hose of the embodiment includes the hose tube as mentioned above. The hose may be formed only of a hose tube, or may include other members such as a reinforcing layer and an outer layer.

The hose preferably has a reinforcing layer that is positioned around the hose tube. By having a reinforcing layer, a hose exhibits a sufficient strength even when it transports a material at high pressure. In that case, the hose may have another layer between a reinforcing layer and a hose tube, or may have another layer around a reinforcing layer or inside a hose tube. The hose may have a single reinforcing layer or may have two or more thereof.

The material for a reinforcing layer is not particularly limited, and may be selected depending on the desired properties such as strength or durability. Examples of the material for a reinforcing layer include organic materials such as aramide, polyparaphenylenebenzobisoxazol (PBO), polyketone (PK), polyether ether ketone (PEEK), nylon (PA), polyarylate, polyimide, polylactate and fluorine-containing resin, and inorganic materials such as metal, glass and carbon.

The thickness of a reinforcing layer is not particularly limited, and may be selected depending on the desired properties such as strength or durability. For example, the thickness may be 0.2 mm or more, preferably 1.0 mm or more. The thickness may be 20 mm or less, preferably 10 mm or less.

The method of forming a reinforcing layer is not particularly limited. For example, a reinforcing layer may be formed by winding a material for a reinforcing layer in the form of a fiber or a cord around a hose tube in a spiral or blade manner, or by winding a material for a reinforcing layer in the form of a cloth or a knit around a hose tube.

The hose may have an outer layer that is positioned around a reinforcing layer. By providing an outer layer, strength of the hose can be further improved, and the hose can be protected from an external environment such as rain water and chemicals. The material for an outer layer is not particularly limited, and examples thereof include a resin (which may be an elastomer) such as polyamide, polyurethane, polyester and polyolefin.

Since the hose exhibits excellent durability under a cold environment, it may be preferably used as a hose to be used under a cold environment or as a hose for transporting a cold material. In particular, the hose is suitably used as a hose for transporting hydrogen gas, which is often transported under a low temperature and at high pressure.

The disclosure include the embodiments as mentioned below.
<1> A resin material for a hose, the resin material having a breaking extension of 20% or more under an environment of -40°C and containing substantially no plasticizer.
<2> The resin material for a hose according to <1>, the resin material having a breaking strength of 25 MPa or more under an environment of -40°C.
<3> The resin material for a hose according to <1> or <2>, the resin material having a breaking extension of 500% or less under an environment of -40°C.
<4> The resin material for a hose according to any one of <1> to <3>, the resin material comprising a resin having a melting point of from 180°C to 210°C.
<5> The resin material for a hose according to any one of <1> to <4>, the resin material comprising a resin having a weight average molecular weight of from 50,000 to 70,000.
<6> The resin material for a hose according to any one of <1> to <5>, the resin material comprising a polyamide.
<7> A hose tube that is a product formed from a resin material, the resin material having a breaking extension of 20% or more under an environment of -40°C and containing substantially no plasticizer.
<8> The hose tube according to <7>, wherein the resin material has a breaking strength of 25 MPa or more under an environment of -40°C.
<9> The hose tube according to <7> or <8>, wherein the resin material comprises a polyamide.
<10> A hose comprising the hose tube according to any one of <7> to <9>.
<11> The hose according to <10>, comprising a reinforcing layer that is positioned around the hose tube.
<12> The hose according to <10> or <11>, for transporting hydrogen gas.

### Examples

In the following, the disclosure will be explained by referring to the examples, but the disclosure is not limited thereto.

### [Example 1]

A hose tube (length: 1 m, inner diameter: 6.5 mm, thickness: 1.5 mm) was prepared from a polyamide (PA11), which contains substantially no plasticizer and has a melting point, a weight average molecular weight and a crystallinity as shown in Table 1, as a resin material. Subsequently, a reinforcing layer (total thickness: 6.0 mm) having a three-layer structure was formed by winding a metal wire around the hose tube. Subsequently, an outer layer (thickness: 1.2 mm) was formed around the reinforcing layer with a polyamide (PA12), thereby obtaining a hose.

### [Example 2 and Comparative Examples 1-3, 6]

A hose was prepared in the same manner as Example 1, except that a hose tube was prepared by using a polyamide (PA11), which contains a phenol compound as a plasticizer in an amount as shown in Table 1 and has a melting point, a weight average molecular weight and a crystallinity as shown in Table 1, as a resin material.

### [Comparative Examples 4, 5]

A hose was prepared in the same manner as Example 1, except that a hose tube was prepared by using a polyamide (PA12), which contains substantially no plasticizer and has a melting point, a weight average molecular weight and a crystallinity as shown in Table 1, or by using a polyamide (PA12), which contains a plasticizer in an amount of 3% by mass and has a melting point, a weight average molecular weight and a crystallinity as shown in Table 1, as a resin material.

### (Breaking extension and breaking strength under cold environment)

A test piece having a 6-grade dumbbell was prepared from a resin material used for the preparation of the hose tube, and the test piece was subjected to a tensile test with a tensile tester at a rate of 50 mm/min based on JIS K 6251 (2010) to measure a breaking extension (%) and a breaking strength (MPa). The test was performed in an apparatus in which the temperature was maintained at -40°C.

### (Durability under cold environment)

The hose was subjected to application and reduction of a pressure in an alternate manner between approximately 0 MPa and 70 MPa at an environmental temperature of -40°C, with a mineral operating oil that does not freeze at low temperature as a material to be transported. Based on the number of times of repeating the application and the reduction of a pressure until the breakage of the hose tube, durability of the hose was evaluated by the following criteria. When the evaluation is either A or B, it is considered that the hose has sufficient durability when it transports a material at low temperature and high pressure.
A: The hose tube did not break after repeating application and reduction of a pressure for 25,000 times.
B: The hose tube broke after repeating application and reduction of a pressure for from 20,000 times to less than 25,000 times.
C: The hose tube broke after repeating application and reduction of a pressure for from 15,000 times to less than 20,000 times.
D: The hose tube broke after repeating application and reduction of a pressure for from 10,000 times to less than 15,000 times.
E: The hose tube broke after repeating application and reduction of a pressure for less than 10,000 times.

### (Hydrogen gas permeability)

The hose tube (measurement length: 200 mm) was subjected to a test for measuring the permeability with respect to hydrogen gas (cm³/m· 24hr· atm), by allowing hydrogen gas to flow inside the hose tube at an environmental temperature of 70°C and a pressure of 2 MPa. The measurement was performed based on JIS K7126-2, and the result was evaluated by the following criteria.
A: The gas permeability was 9.5 cm³/m· 24hr· atm or less.
B: The gas permeability was from 9.5 to 11.0 cm3/m· 24hr· atm.
C: The gas permeability was from 11.0 to 14.0 cm3/m· 24hr· atm.
D: The gas permeability was from 14.0 to 18.0 cm³/m· 24hr· atm.
E: The gas permeability was 18.0 cm3/m· 24hr· atm or more.

### (Processability of reinforcing layer (dimension stability))

The stability of the outer diameter of a reinforcing layer, which was formed by winding a metal wire around the hose tube with the constant conditions, was evaluated by the following criteria.
A: The outer diameter of the reinforcing layer is maintained stable at approximately the center value, and is applicable to wire winding.
B: The outer diameter of the reinforcing layer is maintained stable at approximately within the predetermined tolerance, and is applicable to wire winding.
C: The outer diameter of the reinforcing layer is maintained stable at approximately within the predetermined tolerance, but may deviate without adjusting the winding conditions during the process.
D: The outer diameter of the reinforcing layer may deviate from the predetermined tolerance, or may be outside the predetermined tolerance, without adjusting the winding conditions during the process.
E: The outer diameter of the reinforcing layer is outside the predetermined tolerance even with the adjustment of winding conditions.

**[Table 1]**

| | Examples | | | Comparative Examples | | | | | |
|---|---|---|---|---|---|---|---|---|---|
| | 1 | 2 | 3 | 1 | 2 | 3 | 4 | 5 | 6 |
| Resin Type | PA11 | PA11 | PA11 | PA11 | PA11 | PA11 | PA12 | PA12 | PA11 |
| Plasticizer Content (%) | 0 | 3 | 3 | 10 | 15 | 30 | 0 | 3 | 3 |
| Breaking Extension at -40 °C (%) | 210 | 100 | 20 | 10 | 10 | 10 | 10 | 10 | 18 |
| Breaking Strength at -40 °C (%) | 70 | 65 | 65 | 60 | 60 | 60 | 70 | 60 | 65 |
| Melting Point (°C) | 187 | 180 | 180 | 178 | 175 | 170 | 170 | 165 | 175 |
| Mw | 60,000 | 58,000 | 58,000 | 80,000 | 90,000 | 100,000 | 85,000 | 95,000 | 58,000 |
| Crystallinity (%) | 23 | 21 | 20 | 19 | 16 | 13 | 38 | 38 | 18 |
| Durability | A | A | B | D | D | D | E | E | C |
| Hydrogen Gas Permeability | A | A | B | C | C | D | E | E | B |
| Dimension Stability | A | A | A | C | D | E | A | A | C |

As shown in Table 1, Examples 1 to Example 3, in which the resin material does not contain a plasticizer or contains 3% by mass of a plasticizer and a breaking extension under a cold environment was 20% or more, exhibit favorable results in the evaluation of durability, hydrogen gas permeability and dimensional stability.

Comparative Examples 1 to 3, in which the resin material contain 10% by mass, 15% by mass or 30% by mass of a plasticizer, have a breaking extension under a cold environment of less than 20% and exhibit poor results in the evaluation of durability.

Comparative Example 4, in which the resin material does not contain a plasticizer, and Comparative Example 5, in which the breaking extension is less than 20% even though the content of a plasticizer is 3% by mass, exhibit inferior results in the evaluation of durability and hydrogen gas permeability as compared with the Examples.

Comparative Example 3, having a breaking extension of less than 20% even though the content of a plasticizer is 3% by mass, exhibits inferior results in the evaluation of durability and dimensional stability as compared with the Examples.

In view of the above, it is found that a hose tube and a hose that exhibit excellent durability under a cold environment can be produced by using a resin material that contains substantially no plasticizer and has a breaking extension of 20% or more at -40°C.

The disclosure of Japanese Patent Application No. 2015-190496 is incorporated herein by reference. All publications, patent applications, and technical standards mentioned in this specification are herein incorporated by reference to the same extent as if each individual publication, patent application, or technical standard was specifically and individually indicated to be incorporated by reference.

## Claims

1. A resin material for a hose, the resin material having a breaking extension of 20% or more under an environment of -40°C and containing substantially no plasticizer.

2. The resin material for a hose according to claim 1, the resin material having a breaking strength of 25 MPa or more under an environment of -40°C.

3. The resin material for a hose according to claim 1 or claim 2, the resin material having a breaking extension of 500% or less under an environment of -40°C.

4. The resin material for a hose according to any one of claim 1 to claim 3, the resin material comprising a resin having a melting point of from 180°C to 210°C.

5. The resin material for a hose according to any one of claim 1 to claim 4, the resin material comprising a resin having a weight average molecular weight of from 50,000 to 70,000.

6. The resin material for a hose according to any one of claim 1 to claim 5, the resin material comprising a polyamide.

7. A hose tube that is a product formed from a resin material, the resin material having a breaking extension of 20% or more under an environment of -40°C and containing substantially no plasticizer.

8. The hose tube according to claim 7, wherein the resin material has a breaking strength of 25 MPa or more under an environment of -40°C.

9. The hose tube according to claim 7 or claim 8, wherein the resin material comprises a polyamide.

10. A hose comprising the hose tube according to any one of claim 7 to claim 9.

11. The hose according to claim 10, comprising a reinforcing layer that is positioned around the hose tube.

12. The hose according to claim 10 or claim 11, for transporting hydrogen gas.
